# EUROPÄISCHE PATENTSCHRIFT

(11) **EP 1 915 577 B1**
(45) Veröffentlichungstag und Bekanntmachung des Hinweises auf die Patenterteilung: **06.01.2010**
(21) Anmeldenummer: 06791593.4
(22) Anmeldetag: 18.08.2006
(51) Int. Cl.: F24F 6/00, H01M 8/04

(54) **BEFEUCHTER**
HUMIDIFIER
HUMIDIFICATEUR

(30) Priorität: 19.08.2005 DE 102005039252; 30.03.2006 DE 102006015236
(43) Veröffentlichungstag der Anmeldung: 30.04.2008
(73) Patentinhaber: Carl Freudenberg KG, 69469 Weinheim (DE)
(72) Erfinder: EPING, Udo, 64295 Darmstadt (DE); SCHNEIDER, Franz, 68519 Viernheim (DE); LEISTER, Klaus, 69469 Weinheim (DE); GEISS, Stefan, 69514 Laudenbach (DE); WOLF, Joachim, 69469 Weinheim (DE); SENNE, Volker, 69488 Birkenau (DE); EHRENTRAUT, Harald, 64285 Darmstadt (DE); ALTMÜLLER, Bernd, 69488 Birkenau (DE)
(86) Internationale Anmeldenummer: PCT/EP2006/008179
(87) Internationale Veröffentlichungsnummer: WO 2007/020107

(56) Entgegenhaltungen:
- EP-A1- 1 096 182
- WO-A-02/074423
- GB-A- 2 082 921
- JP-A- 2002 301 158
- JP-A- 2003 065 566
- JP-A- 2003 161 473

## Beschreibung

### Technisches Gebiet

Die Erfindung betrifft einen Befeuchter, umfassend ein Gehäuse zur Aufnahme eines Befeuchtermoduls, wobei das Gehäuse durch Gehäusedeckel verschließbar ist und wobei zumindest ein erstes Dichtelement vorgesehen ist, welches das Befeuchtermodul gegenüber dem Gehäuse abdichtet.

### Stand der Technik

Derartige Befeuchter sind aus der JP 2004028490 A bekannt. Diese finden in Brennstoffzellen, insbesondere in PEM-Brennstoffzellen ihre Verwendung. Diese Brennstoffzellen benötigen für den Betrieb befeuchtete Luft, um ein Austrocknen der Brennstoffzellen-Membranen zu verhindern. Das Gehäuse des Befeuchter ist häufig ein zylindrischer Körper in dem zumindest ein Befeuchtermodul angeordnet ist. Das Gehäuse ist mehrteilig aufgebaut und besteht aus einem zylindrischen Gehäuseabschnitt an dem an den beiden Stirnseiten Gehäusedeckel befestigt sind. Die Verbindungsstelle von Gehäuseabschnitt und Gehäusedeckel erfolgt dabei häufig mit O-Ringen, die in einer Nut des Gehäuseabschnittes oder des Befeuchtermoduls angeordnet sind. Dabei ist nachteilig, dass für die erforderliche Dichtheit hohe Toleranzanforderungen bestehen. Des Weiteren ist der Befeuchter Temperaturschwankungen unterworfen, die aufgrund verschiedener Materialien für Gehäuse und Befeuchtermodul zu unterschiedlichen Wärmeausdehnungen führen. Bei fest eingespannten Befeuchtermodulen führt dies zu Spannungen oder zu Leckagen.

Aus der WO 02/074423 A1, der JP 2003-65566 A und der GB 2 082 921 A sind Befeuchter bestehend aus einem Gehäuse, welches ein Befeuchtermodul aufnimmt, bekannt. Das Befeuchtermodul weist Dichtelemente auf, welche das Befeuchtermodul gegenüber dem Gehäuse abdichten, wobei das Befeuchtermodul an den Dichtelementen axial gleitbeweglich anliegt.

### Darstellung der Erfindung

Der Erfindung liegt die Aufgabe zugrunde, einen Befeuchter bereitzustellen, der eine spannungsfreie Einbindung der Befeuchtermodule bei Verringerung von Lärmübertragung erlaubt.

Diese Aufgabe wird mit den Merkmalen von Anspruch 1 gelöst. Auf vorteilhafte Ausgestaltungen nehmen die Unteransprüche Bezug.

Zur Lösung der Aufgabe liegt das Befeuchtermodul am ersten Dichtelement axial und/oder radial gleitbeweglich an und das Befeuchtermodul weist an einer ersten Stirnseite einen umlaufenden Bund auf, wobei in dem das Gehäuse innenumfangsseitig im Bereich des Bundes ein umlaufender Vorsprung angeordnet ist und wobei zwischen Bund und Vorsprung ein zweites Dichtelement angeordnet ist und wobei das Gehäuse einen zweiten innenumfangsseitig umlaufenden Vorsprung aufweist, der der zweiten Stirnseite des Befeuchtermoduls zugeordnet ist, wobei der zweite Vorsprung einen Einbauraum begrenzt in dem das erste Dichtelement angeordnet ist. Dabei liegt das Dichtelement einerseits dichtend am Außenumfang des Befeuchtermoduls an und andererseits ist die Anpressung des Dichtelements an das Befeuchtermoduls so gewählt, dass das Befeuchtermodul bei hoher Dichtheit in axialer Richtung beweglich ist und damit eine Loslagerdichtung bildet, um beispielsweise Wärmedehnungen oder Toleranzen insbesondere bezüglich des Durchmessers auszugleichen. Dafür ist ein Ausgleichsraum vorgesehen, der durch den Gehäusedeckel, dem Befeuchtermodul und dem ersten Dichtelement begrenzt wird. In diesen Ausgleichsraum kann sich das Befeuchtermodul erstrecken. Durch das Dichtelement werden zum einen der feuchte Luftstrom, der zu befeuchtende Luftstrom und diese beiden Luftströme gegenüber der Umgebung abgedichtet. Dabei treten zwischen den beiden Luftströmen Druckdifferenzen bis etwa 100 mbar und zwischen den Luftströmen und der Umgebung Druckdifferenzen bis etwa 2,5 bar auf, die durch die erfindungsgemäße Dichtungsanordnung zuverlässig abgedichtet werden. Das Befeuchtermodul kann rund oder rechteckig ausgebildet sein. Runde Befeuchtermodule weise eine besonders günstige Strömungsführung auf und rechteckige Befeuchtermodule weisen eine besonders günstige Raumnutzung auf. Die Gehäusedeckel können mittels Schraubverbindungen an dem Gehäuse befestigt sein. Schraubverbindungen können besonders einfach hergestellt werden. Bei Schraubverbindungen kann durch Wahl bestimmter Anzugsdrehmomente eine genau definierte Anpresskraft der Deckel erzielt werden, was insbesondere für die erste Dichtung relevant ist. Durch das Anzugsdrehmoment ergibt sich die Normalkraft die über das Dichtelement radial auf das Befeuchtermodul wirkt. Das Moment wird so gewählt, dass ein axiales Verschieben bei Wärmedehnungen möglich ist. Bei der erfindungsgemäßen Ausgestaltung wird entweder auf dem Befeuchtermodul oder in dem Gehäuse die erste Dichtung angeordnet und das Befeuchtermodul wird in das Gehäuse eingeführt. Danach wird das erste Dichtelement in dem Einbauraum platziert. Das Befeuchtermodul ist in dieser Ausgestaltung besonders einfach in das Gehäuse einführbar und das Gehäuse sowie das Befeuchtermodul weisen einen einfachen Aufbau auf. Die Dichtstelle des zweiten Dichtelements bildet dabei ein Festlager und die Dichtstelle des ersten Dichtelements bildet ein Loslager, welches ermöglicht, Längenänderungen des Befeuchtermoduls beispielsweise durch Temperaturänderungen auszugleichen. Es kann beiderseits des Bundes des Befeuchtermoduls jeweils ein zweites Dichtelement angeordnet werden. Im Bereich des zweiten Dichtelements weist das Befeuchtermodul dadurch keine oder nur einen geringen direkten Kontakt mit dem umgebenden Gehäuse auf. Durch den Elastomerkörper gibt es auch keinen direkten Kontakt mit dem Deckel. Dadurch ergibt sich eine schwingungsentkoppelte Anordnung, wodurch Lärmentwicklung vermieden wird. Dabei kann das zweite Dichtelement durch einen Elastomerkörper gebildet sein. Der Elastomerkörper kann als O-Ring oder als eine Beschichtung aus elastomerem Material ausgebildet sein. O-Ringe sind seit langem als statische Dichtelemente bekannt und sind preiswert verfügbar. O-Ringe sind in verschiedensten Durchmessern und Querschnitten erhältlich.

Die erfindungsgemäße Anordnung ist insbesondere bei umhüllungslosen Befeuchtermodul vorteilhaft. Befeuchtermodule mit Austauscherflächen bestehend aus Hohlfasern weisen meist eine Umhüllung auf in denen die Hohlfasern dichtend an beiden Stirnseiten durch eine Vergussmasse beispielsweise ein Kunstharz (z.B. Epoxidharz) eingegossen und fixiert sind. Diese Befeuchtermodule mit Umhüllung werden in ein Befeuchtergehäuse eingesetzt und befestigt. Die Hohlfasern können auch direkt in einem Gehäuse angeordnet werden. Ein derartiger Befeuchter umfasst ein Gehäuse mit Deckel und Dichtung und wenigstens ein Bündel aus Hohlfasern die an beiden Stirnseiten durch ein Kunstharz miteinander verbunden sind. Dadurch ergibt sich eine größere Formenvielfalt und die Befeuchtermodule können jeder Gehäuseform angepasst werden. Dazu werden die Hohlfasern in dem Gehäuse angeordnet und an den Stirnseiten verschlossen, das Fixieren mit Kunstharz erfolgt anschließend direkt in dem Gehäuse. Allerdings treten bei diesem Verfahren Schrumpfungen des mit Kunstharz fixierten Hohlfaserbündels auf, so dass sich eine umlaufende Fuge zwischen Hohlfaserbündel und Gehäuse ergeben kann. Diese Fuge wird durch die erfindungsgemäße Dichtungsanordnung zuverlässig abgedichtet.

Beide Dichtelemente können an ihren nach innen weisenden Flanke und ihren nach außen weisenden Flanke eben ausgebildet sein. Da die Stirnseiten der Dichtelemente ebenfalls eben ausgebildet sind, weist das Dichtelement einen im Wesentlichen rechteckigen Querschnitt auf. Dadurch wird ein Verdrehen des Dichtelements bei der Montage des Dichtelementes in die Aufnahme verhindert. Des Weiteren ermöglicht diese Anordnung eine einfache Montage des Befeuchtermoduls. Alternativ kann bei dieser Ausgestaltung das Dichtelement auch nach der Montage des Befeuchtermoduls in der Aufnahme angeordnet werden, wodurch die Montage zusätzlich vereinfacht ist. Aufgrund der rechteckigen Formgebung füllt das Dichtelement die Aufnahme im Wesentlichen vollständig aus und bereits geringe durch den Gehäusedeckel aufgebrachte Axialkräften führen zu einer hohen Dichtheit an der abzudichtenden Verbindungsstelle. Die Toleranzanforderung sind geringer als bei O-Ring Abdichtungen. Das Dichtelement kann auf der dem Gehäusedeckel zugewandten Stirnseite eine umlaufende Erhebung aufweisen. Die Erhebung ist dabei vorzugsweise radial außerhalb der mittleren Weite, im Bereich der nach außen weisenden Flanke angeordnet. Die mittlere Weite bestimmt sich durch Bildung des Mittelwertes aus innerer Weite und äußerer Weite des Dichtelementes. Durch die Erhebung ergibt sich eine größere Dichtfläche an der nach außen weisenden Flanke und dadurch eine nochmals verbesserte Dichtwirkung. Das Dichtelement kann auf der dem Gehäuseabschnitt zugewandten Stirnseite eine umlaufende erste Vertiefung aufweisen. Durch die Vertiefung ergibt sich eine verbesserte Krafteinwirkung auf die Flanken des Dichtelementes und dadurch eine verbesserte Dichtwirkung. Das Dichtelement kann auf der dem Gehäusedeckel zugewandten Stirnseite eine umlaufende zweite Vertiefung aufweisen. Dabei kann in einer vorteilhaften Ausgestaltung der Gehäusedeckel eine kongruent ausgebildete Erhebung aufweisen, die in die Vertiefung eingreifbar ist. Dadurch ist das Dichtelement in seiner Lage fixiert. Die gedachte Weite der tiefsten Stelle der zweiten Vertiefung kann sich von der mittleren Weite des Dichtelements unterscheiden. Die mittlere Weite bestimmt sich wiederum durch Bildung des Mittelwertes aus innerer Weite und äußerer Weite des Dichtelementes. Durch diese asymmetrische Ausgestaltung ergibt sich eine asymmetrische Krafteinleitung durch den Gehäusedeckel in das Dichtelement. Dadurch erfährt, je nach Ausgestaltung, eine der beiden Flanken, entweder die Innenseite oder die Außenseite, eine höhere Flächenpressung. Der gedachte Durchmesser der der tiefsten Stelle der zweiten Vertiefung kann kleiner sein als der mittlere Durchmesser des Dichtelements. Dadurch ist die Flächenpressung an der Außenseite des Dichtelementes höher als an dessen Innenseite. Das an der Innenseite des Dichtelementes anliegende, abzudichtende Befeuchtermodul wird bei dieser Ausgestaltung weniger verpresst, wobei eine axiales Verschieben des Befeuchtermoduls ermöglicht ist. Das Dichtelement kann an der nach innen weisenden Flanke und/oder an der nach außen weisenden Flanke zumindest eine umlaufende Dichtwulst aufweisen. In einer vorteilhaften Ausgestaltung sind an der nach innen weisenden Flanke und der nach außen weisenden Flanke jeweils drei Dichtwülste angeordnet. Die Dichtwülste verbessern zusätzlich die Dichtwirkung des Dichtelementes bei verringerten Toleranzanforderungen an die Dichtungsgeometrie. Das Dichtelement kann aus einem Elastomer mit einer Shore-Härte kleiner 70 gebildet sein. Derartige Dichtelemente sind einfach montierbar und können mit einfachen Mitteln verpresst werden.

Das erste Dichtelement kann als X-Ring ausgebildet sein. X-Ringe sind ebenfalls seit langem als statische Dichtelemente bekannt und in verschiedenen Ausführungen erhältlich. In der erfindungsgemäßen Anordnung ist vorteilhaft, dass X-Ringe bei einer geringen Verpressung eine gute Dichtwirkung erzielen. Dadurch sind die X-Ringe einfach montierbar. Des Weiteren gleichen X-Ringe aufgrund ihrer Geometrie Toleranzen des Einbauraums aus.

Das erste Dichtelement kann eine im Wesentlichen radial nach innen ragende umlaufende Dichtlippe aufweisen. Diese Dichtlippe ist in axialer Richtung und auch in radialer Richtung sehr beweglich. Das bedeutet, dass die Dichtlippe große Toleranzen des Befeuchtermoduls in axialer Richtung oder bezüglich des Durchmessers überbrückt und unempfindlich gegenüber Wärmedehnungen ist. Die Dichtlippe liegt dichtend an dem Außenumfang des Befeuchtermoduls an.

Zumindest der dem ersten Dichtelement zugeordnete Gehäusedeckel kann eine umlaufende Erhebung aufweisen, die an dem ersten Dichtelement anliegt. Durch die umlaufende Wulst ergibt sich in diesem Bereich eine stärkere Verpressung und es erfolgt eine Verdrängung des Materials des Dichtelementes. Dadurch erhöht sich die Anpressung des Dichtelementes in den radial angrenzenden Bereichen. Bei dieser Ausgestaltung verbessert sich nochmals die Dichtheit zwischen Gehäuseabschnitt und Befeuchtermodul.

Das erste und/oder das zweite Dichtelement können aus EPDM bestehen. EPDM ist heißwasser und dampfbeständig und daher zum Einsatz in Befeuchtem besonders geeignet.

### Kurzbeschreibung der Zeichnungen

Einige Ausführungsbeispiele des erfindungsgemäßen Befeuchters werden nachfolgend anhand der Figuren näher erläutert. Diese zeigen, jeweils schematisch:
Fig. 1 einen erfindungsgemäßen Befeuchter mit X-Ring;
Fig. 2 einen Befeuchter mit rechteckigem Dichtelement;
Fig. 3 ein in dem Befeuchter angeordnetes Dichtelement;
Fig. 4 ein Dichtelement mit umlaufenden Wülsten;
Fig. 5 ein Dichtelement mit beidseitigen Vertiefungen;
Fig. 6 ein Dichtelement mit einer Montagekante;
Fig. 7 ein beidseitig axial verschieblich eingespanntes Befeuchtermodul;
Fig. 8 ein Befeuchter;
Fig. 9 ein Dichtelement mit einer innenumfangsseitig angeordneten Dichtlippe.

### Ausführung der Erfindung

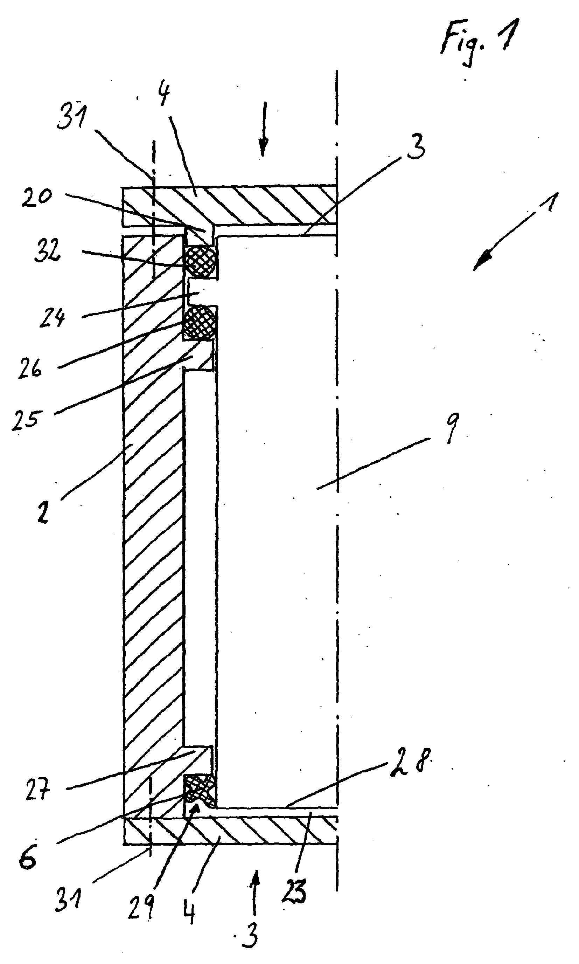

Figur 1 zeigt einen Befeuchter 1, bestehend aus einem Gehäuse 2 aus metallischem Werkstoff in dem ein Befeuchtermodul 9 angeordnet ist, welches im Wesentlichen aus Kunststoff besteht. Das Befeuchtermodul 9 beinhaltet Hohlfasern zum Stoffaustausch. Das einen runden oder rechteckigen Querschnitt aufweisende Befeuchtermodul 9 weist an einer ersten Stirnseite 3 einen umlaufenden Bund 24 auf und das Gehäuse 2 weist innenumfangsseitig im Bereich des Bundes 24 einen umlaufenden Vorsprung 25 auf. Zwischen Bund 24 und Vorsprung 25 ist ein zweites Dichtelement 26 angeordnet welches in dieser Ausführung als O-Ring ausgebildet ist. Das Gehäuse 2 weist einen zweiten innenumfangsseitig umlaufenden Vorsprung 27 auf, der der zweiten Stirnseite 28 des Befeuchtermoduls 9 zugeordnet ist. Der zweite Vorsprung 28 begrenzt einen Einbauraum 29 in dem ein erstes Dichtelement 6 angeordnet ist, welches in dieser Ausführung als X-Ring ausgeführt ist. Durch den Gehäusedeckel 4, das Befeuchtermodul 9 und dem ersten Dichtelement 6 wird ein Ausgleichsraum 23 begrenzt in den sich das Befeuchtermodul 9 erstrecken kann. Das Gehäuse 2 an seinen beiden Stirnseiten 3, 28 durch Gehäusedeckel 4 mittels Schraubverbindungen 31 verschließbar. Der der ersten Stirnseite 3 zugeordnete Gehäusedeckel 4 weist eine Erhebung 20 auf, der an dem Bund 24 des Befeuchtermoduls 9 anliegt und dadurch das zweite Dichtelement 26 in axialer Richtung verpresst. Zwischen Erhebung 20 und Bund 24 ist ein Elastomerkörper 32 angeordnet, der hier als O-Ring ausgebildet ist und der primär der Schwingungsdämpfung dient. Der Befeuchter 1 wird in PEM-Brennstoffzellen eingesetzt, um die Brennstoffzellen-Zuluft zu befeuchten.

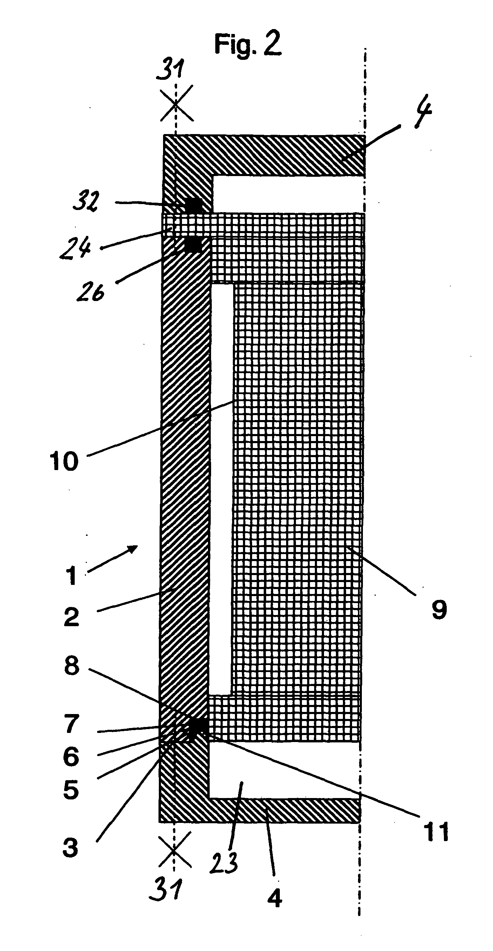

Figur 2 zeigt einen Befeuchter 1 gemäß Figur 1 mit einem zylinderförmigen oder rechteckigen Gehäuse 2 an dessen einer Stirnseite 3 ein Gehäusedeckel 4 angeordnet, wobei Gehäuseabschnitt 2 und Gehäusedeckel 4 miteinander verschraubt sind. An der dem Gehäusedeckel 4 zugewandten Stirnseite 3 des Gehäuseabschnitts 2 ist eine Aufnahme 5 für ein Dichtelement 6 angeordnet.

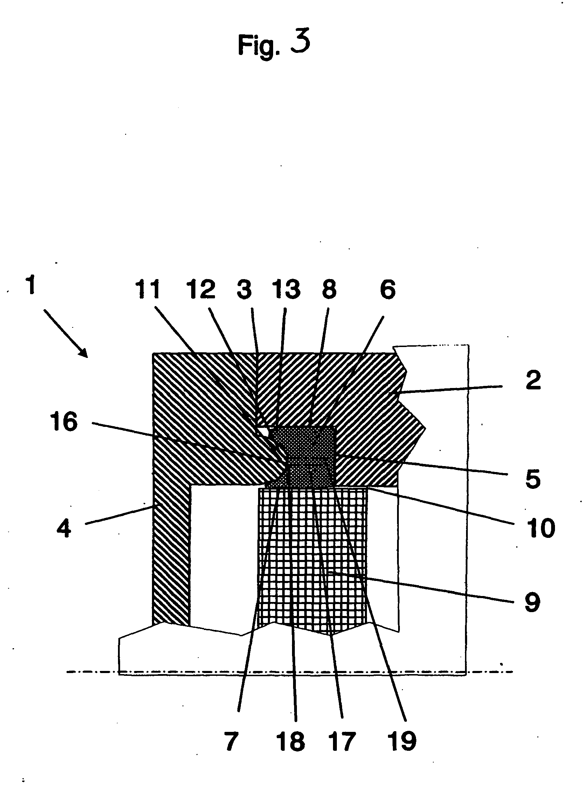

Figur 3 zeigt einen Ausschnitt des in Figur 2 beschriebenen Befeuchters 1. Das in der Aufnahme 5 angeordnete erste Dichtelement 6 weist einen kreisförmigen oder rechteckigen Querschnitt auf und ist an seiner nach innen weisenden Flanke 7 und seiner nach außen weisenden Flanke 8 eben ausgebildet. In dem Gehäuseabschnitt 2 ist ein Befeuchtermodul 9 angeordnet, wobei das Dichtelement 6 an der Außenwand 10 des Befeuchtermoduls 9 dichtend anliegt und damit ein erstes Medium, welches das Befeuchtermodul 9 durchströmt und in dem Befeuchtermoduls 9 angeordnete Hohlfasern umströmt von einem zweiten Medium trennt, welches die Hohlfasern durchströmt. Der Gehäusedeckel 4 weist eine umlaufende Erhebung 11 auf und das Dichtelement 6 weist eine kongruent geformte zweite Vertiefung 16 auf, die in die Erhebung 11 eingreift. Die Vertiefung ist derart auf dem Dichtelement 6 angeordnet, dass sich die gedachte Weite 17 der tiefsten Stelle 18 der zweite Vertiefung 16 von der mittleren Weite 19 des Dichtelements 6 unterscheidet. In dieser Ausführung ist die gedachte Weite 17 der der tiefsten Stelle 18 der zweiten Vertiefung 16 kleiner als die mittlere Weite 19 des Dichtelements 6. Die mittlere Weite 19 bestimmt sich durch Bildung des Mittelwertes aus innerer Weite (beispielsweise Innendurchmesser) und äußerer Weite (beispielsweise Außendurchmesser) des Dichtelementes 9. Das Dichtelement 6 weist außerdem eine auf der dem Gehäusedeckel 4 zugewandten Stirnseite 12 umlaufende Erhebung 13 auf, die benachbart zu der zweiten Vertiefung 16 angeordnet ist. Das Dichtelement 6 ist aus einem Elastomer mit einer Shore-Härte kleiner 70 gebildet.

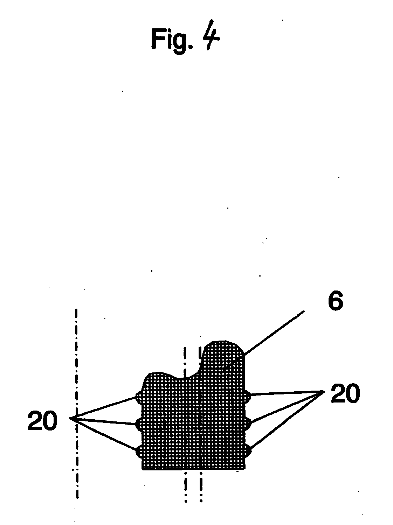

Figur 4 zeigt ein Dichtelement 6 gemäß Figur 3, wobei das Dichtelement 6 zusätzlich an der nach innen weisenden Flanke und an der nach außen weisenden Flanke jeweils drei materialeinheitlich und einstückig mit dem Dichtelement 6 ausgebildete umlaufende Dichtwülste 20 aufweist.

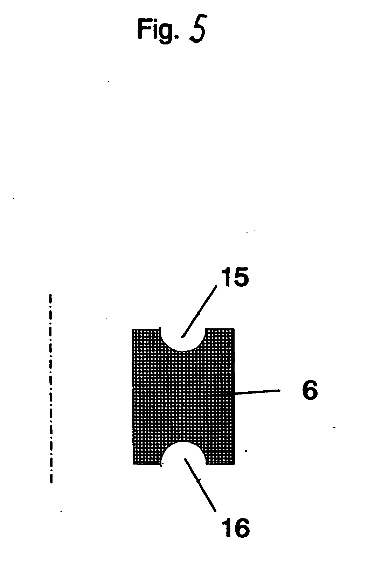

Figur 5 zeigt ein Dichtelement 6 gemäß Figur 3, wobei das Dichtelement 6 auf der dem Gehäuseabschnitt 2 zugewandten Stirnseite eine umlaufende erste Vertiefung 15 und auf der dem Gehäusedeckel zugewandten Stirnseite eine zweite Vertiefung 16 aufweist. Das Dichtelement 6 ist im Wesentlichen rechteckig ausgebildet.

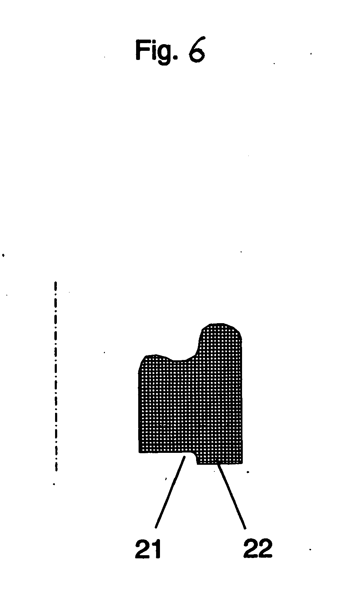

Figur 6 zeigt ein Dichtelement 9 gemäß Figur 3, wobei das Dichtelement 6 auf der dem Gehäuseabschnitt 2 zugewandten Stirnseite eine umlaufende Ausnehmung 21 aufweist. Die dadurch entstandene Erhebung 22 ist dazu geeignet, in eine kongruent gestaltete Nut der in dem Gehäuseabschnitt 2 angeordneten Aufnahme 5 einzugreifen und dadurch die Montage zu vereinfachen.

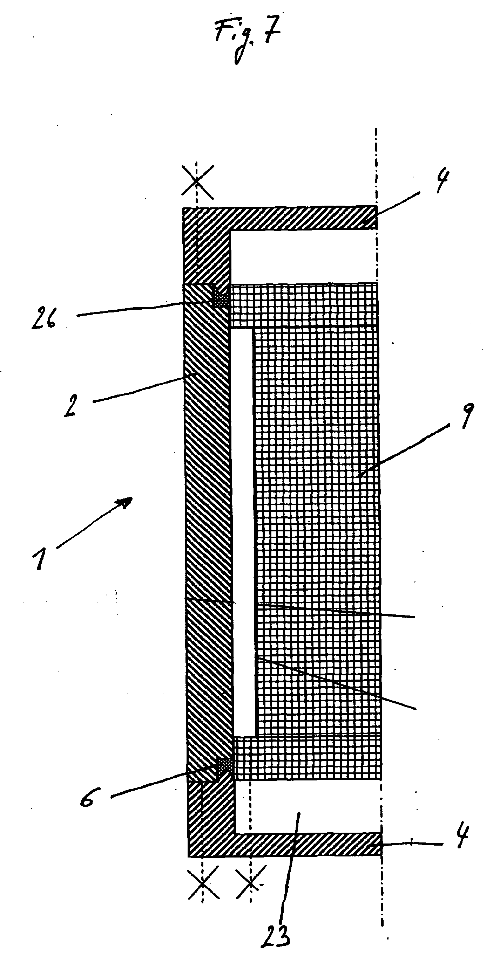

Figur 7 zeigt einen Befeuchter 1 gemäß Figur 2 bei dem beiden Dichtelement 6, 26 so angeordnet sind, dass das Befeuchtermodul 9 an beiden Dichtelementen 6, 26 axial gleitbeweglich ist. Dazu ist das zweite Dichtelement 26 kongruent zu dem ersten Dichtelement 6 ausgebildet.

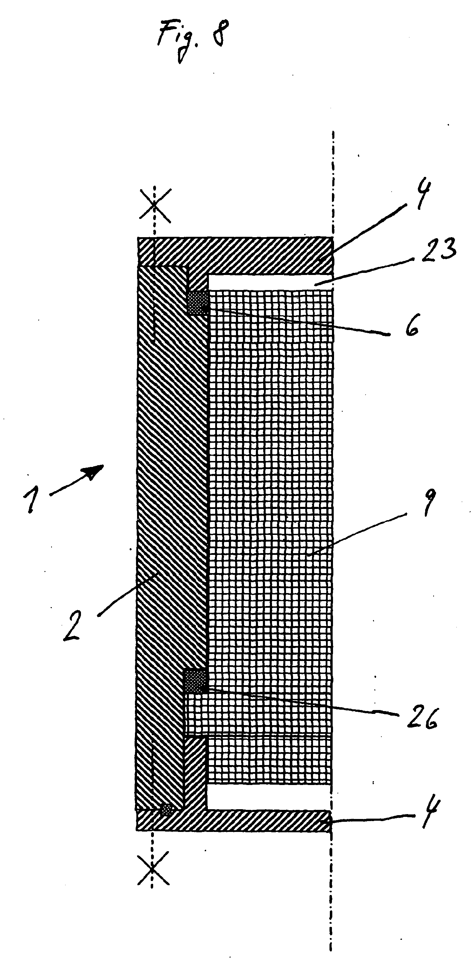

Figur 8 zeigt einen Befeuchter 1 gemäß Figur 1, wobei das erste Dichtelement 6 in dieser Ausführung durch den Gehäusedeckel 4 verspannt wird, so dass sich eine erhöhte Normalkraft auf den Außenrand des Befeuchtermoduls 9 ergibt.

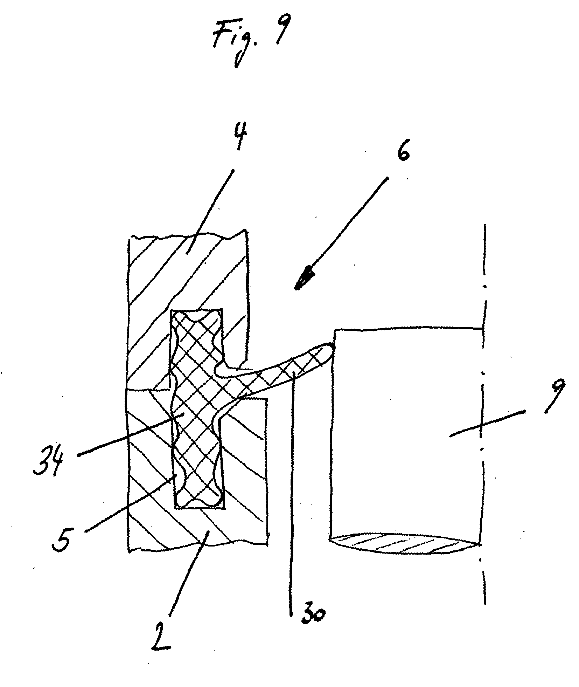

Figur 9 zeigt im Detail ein erstes Dichtelement 6 für einen Befeuchter 1 gemäß einem der vorherigen Figuren. Das erste Dichtelement 6 weist einen zylinderförmigen Körper 34 auf von dem etwa mittig eine Dichtlippe 30 radial nach innen abragt. Die Länge der Dichtlippe 28 entspricht der halben Länge des Körpers 34. Das erste Dichtelement 6 wird in Nuten 5 eingelegt die in Gehäuse 2 und Gehäusedeckel 4 eingebracht sind und es wird durch Befestigen des Gehäusedeckels 4 verspannt. Das erste Dichtelement 6 ist in dieser Ausführung aus EPDM gebildet.

## Patentansprüche

1. Befeuchter (1), umfassend ein Gehäuse (2) zur Aufnahme eines Befeuchtermoduls (9), wobei das Gehäuse (2) durch Gehäusedeckel (4) verschließbar ist und wobei zumindest eine erstes Dichtelement (6) vorgesehen ist, welches das Befeuchtermodul (9) gegenüber dem Gehäuse (2) abdichtet, wobei das Befeuchtermodul (9) am ersten Dichtelement (6) axial und/oder radial gleitbeweglich anliegt-, **dadurch gekennzeichnet, dass** das Befeuchtermodul (9) an einer ersten Stirnseite (3) einen umlaufenden Bund (24) aufweist und wobei in dem Gehäuse (2) innenumfangsseitig im Bereich des Bundes (24) ein umlaufender Vorsprung (25) angeordnet ist, wobei zwischen Bund (24) und Vorsprung (25) ein zweites Dichtelement (26) angeordnet ist und wobei das Gehäuse (2) einen zweiten innenumfangsseitig umlaufenden Vorsprung (27) aufweist, der der zweiten Stirnseite (28) des Befeuchtermoduls (9) zugeordnet ist, wobei der zweite Vorsprung (27) einen Einbauraum (29) begrenzt in dem das erste Dichtelement (6) angeordnet ist.

2. Befeuchter nach Anspruch 1, **dadurch gekennzeichnet, dass** der Gehäusedeckel (4), das Befeuchtermodul (9) und das erste Dichtelement (6) einen Ausgleichsraum (23) begrenzen.

3. Befeuchter nach Anspruch 1, **dadurch gekennzeichnet, dass** beiderseits des Bundes (24) des Befeuchtermoduls (9) jeweils ein zweites Dichtelement (26) angeordnet ist.

4. Befeuchter nach einem der Ansprüche 1 bis 3, **dadurch gekennzeichnet, dass** das Dichtelement (6) an seiner nach innen weisenden Flanke (7) und seiner nach außen weisenden Flanke (8) eben ausgebildet ist.

5. Befeuchter nach einem der Ansprüche 1 bis 3, **dadurch gekennzeichnet, dass** das erste Dichtelement (6) als X-Ring ausgebildet ist.

6. Befeuchter nach einem der Ansprüche 1 bis 3, **dadurch gekennzeichnet, dass** das erste Dichtelement (6) eine radial nach innen ragende umlaufende Dichtlippe (30) aufweist.

7. Befeuchter nach einem der Ansprüche 1 bis 6, **dadurch gekennzeichnet, dass** der dem ersten Dichtelement (6) zugeordnete Gehäusedeckel (4) eine umlaufende Erhebung (20) aufweist, die an dem ersten Dichtelement (6) anliegt.

8. Befeuchter nach einem der Ansprüche 1 bis 7, **dadurch gekennzeichnet, dass** das erste und/oder das zweite Dichtelement (6, 26) aus EPDM gebildet ist.

## Claims

1. Humidifier (1), comprising a housing (2) for receiving a humidifier module (9), the housing (2) being closable by means of housing covers (4), and at least one first sealing element (6) being provided, which seals off the humidifier module (9) with respect to the housing (2), the humidifier module (9) bearing against the first sealing element (6) so as to be slidably movable axially and/or radially, **characterized in that** the humidifier module (9) has a peripheral rim (24) on a first end face (3), and a peripheral projection (25) being arranged in the housing (2) internally circumferentially in the region of the rim (24), a second sealing element (26) being arranged between the rim (24) and projection (25), and the housing (2) having a second projection (27) which is internally circumferentially peripheral and which is assigned to the second end face (28) of the humidifier module (9), the second projection (27) delimiting an installation space (29) in which the first sealing element (6) is arranged.

2. Humidifier according to Claim 1, **characterized in that** the housing cover (4), the humidifier module (9) and the first sealing element (6) delimit a compensating space (23).

3. Humidifier according to Claim 1, **characterized in that** a second sealing element (26) is arranged on each of the two sides of the rim (24) of the humidifier module (9).

4. Humidifier according to one of Claims 1 to 3, **characterized in that** the sealing element (6) is designed to be planar on its flank (7) pointing inwards and on its flank (8) pointing outwards.

5. Humidifier according to one of Claims 1 to 3, **characterized in that** the first sealing element (6) is designed as an X-ring.

6. Humidifier according to one of Claims 1 to 3, **characterized in that** the first sealing element (6) has a peripheral sealing lip (30) projecting radially inwards.

7. Humidifier according to one of Claims 1 to 6, **characterized in that** the housing cover (4) assigned to the first sealing element (6) has a peripheral elevation (20) which bears against the first sealing element (6).

8. Humidifier according to one of Claims 1 to 7, **characterized in that** the first and/or the second sealing element (6, 26) is/are formed from EPDM.

## Revendications

1. Humidificateur (1), comprenant un boîtier (2) pour recevoir un module d'humidificateur (9), le boîtier (2) pouvant être fermé par un couvercle de boîtier (4), et au moins un premier élément d'étanchéité (6) étant prévu, lequel réalise l'étanchéité du module d'humidificateur (9) vis-à-vis du boîtier (2), le module d'humidificateur (9) s'appliquant contre le premier élément d'étanchéité (6) axialement et/ou radialement de manière déplaçable par glissement, **caractérisé en ce que** le module d'humidificateur (9) présente sur un premier côté frontal (3) un épaulement périphérique (24) et une saillie circonférentielle (25) étant disposée dans le boîtier (2) du côté de la périphérie intérieure dans la région de l'épaulement (24), un deuxième élément d'étanchéité (26) étant disposé entre l'épaulement (24) et la saillie (25), et le boîtier (2) présentant une deuxième saillie circonférentielle (27) du côté de la périphérie intérieure, laquelle est associée au deuxième côté frontal (28) du module d'humidificateur (9), la deuxième saillie (27) limitant un espace de montage (29) dans lequel est disposé le premier élément d'étanchéité (6).

2. Humidificateur selon la revendication 1,
**caractérisé en ce que** le couvercle de boîtier (4), le module d'humidificateur (9) et le premier élément d'étanchéité (6) délimitent un espace de compensation (23).

3. Humidificateur selon la revendication 1,
**caractérisé en ce qu'**un deuxième élément d'étanchéité (26) est à chaque fois disposé de chaque côté de l'épaulement (24) du module d'humidificateur (9).

4. Humidificateur selon l'une quelconque des revendications 1 à 3, **caractérisé en ce que** l'élément d'étanchéité (6) est réalisé sous forme plane sur son flanc (7) tourné vers l'intérieur et sur son flanc (8) tourné vers l'extérieur.

5. Humidificateur selon l'une quelconque des revendications 1 à 3, **caractérisé en ce que** le premier élément d'étanchéité (6) est réalisé sous forme de bague en X.

6. Humidificateur selon l'une quelconque des revendications 1 à 3, **caractérisé en ce que** le premier élément d'étanchéité (6) présente une lèvre d'étanchéité (30) circonférentielle saillant radialement vers l'intérieur.

7. Humidificateur selon l'une quelconque des revendications 1 à 6, **caractérisé en ce que** le couvercle de boîtier (4) associé au premier élément d'étanchéité (6) présente un rehaussement circonférentiel (20) qui s'applique contre le premier élément d'étanchéité (6).

8. Humidificateur selon l'une quelconque des revendications 1 à 7, **caractérisé en ce que** le premier et/ou le deuxième élément d'étanchéité (6, 26) sont formés en EPDM.
